## Europäisches Patentamt
## European Patent Office
## Office européen des brevets

(11) Numéro de publication: **0 332 482**
**A1**

## DEMANDE DE BREVET EUROPEEN

(21) Numéro de dépôt: **89400408.4**

(22) Date de dépôt: **14.02.89**

(51) Int. Cl.⁴: **A 43 D 3/14**
// F16B21/07

(30) Priorité: **07.03.88 FR 8802877**

(43) Date de publication de la demande:
**13.09.89  Bulletin  89/37**

(84) Etats contractants désignés:
**BE CH DE ES FR GB IT LI**

(71) Demandeur: **PLASTIREAL SOCIETE ANONYME DITE:**
**117, route de Briollay**
**F-49000 Angers  (FR)**

(72) Inventeur: **Cleau, Jacques Olivier**
**La Mélinière Ecuille**
**F-49125 Cheffes sur Sarthe  (FR)**

(74) Mandataire: **Caunet, Jean et al**
**Cabinet BEAU DE LOMENIE 55, rue d'Amsterdam**
**F-75008 Paris  (FR)**

(54) **Embauchoir réglable.**

(57)  L'embauchoir comprend un embout de forme (1) et une plaque incurvée de butée (2) reliés entre eux par une lame-ressort (3) et destinés à être l'un engagé dans le bout d'une chaussure et l'autre appliqué sur le contrefort.

Suivant l'invention, la lame-ressort (3) est montée coulissante dans une glissière (6) de l'embout (1) et présente une crémaillère (4) susceptible de coopérer avec une dent d'arrêt (5) qui est portée par ledit embout (1) en étant libre de se déplacer transversalement à la crémaillère et qui est soumise à l'action d'un organe élastique (8 à 10) tendant à l'engager dans la crémaillère.

Fig-1

## Description

### Embauchoir réglable

La présente invention concerne un embauchoir du type de ceux qui comportent un embout de forme et une plaque incurvée de butée reliés entre eux par une lame-ressort et destinés à être l'un engagé dans le bout d'une chaussure et l'autre appliqué sur le contrefort.

Ces embauchoirs connus remplissent mal leur fonction de conservation de la forme de la chaussure qui en est munie, dès lors que la lame-ressort doit de déformer avec une variation de longueur trop importante par rapport à sa longueur minimale ; en effet, un tel embauchoir doit convenir du 35 au 41 1/2 pour les chaussures de femme et du 38 du 45 pour les chaussures d'homme.

Des embauchoirs connus permettent de remédier à cet inconvénient, en adaptant la longueur au repos de la lame-ressort pour que la force de rappel correspondant à sa déformation soit indépendante de la pointure de la chaussure et adaptée à l'état de la tige de cette chaussure pour la meilleure conservation de sa forme. Il s'agit donc d'embauchoirs réglables.

Le brevet français n° 464.496 décrit un tel embauchoir réglable dans lequel la lame-ressort est montée coulissante dans l'embout et le réglage de la longueur libre de ladite lame est obtenu en engagement un ergot de l'embout dans le trou sélectionné parmi tous ceux que comporte la lame. Bien entendu, il faut maintenir cette lame dans sa position de réglage et à cet effet un levier de blocage 3 est monté dans l'embout et intervient par pression sur ladite lame.

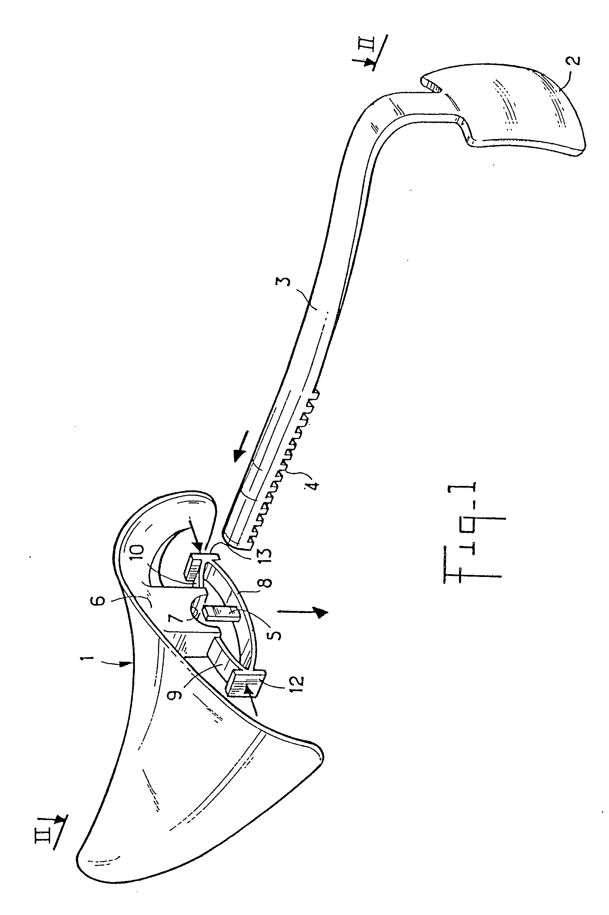

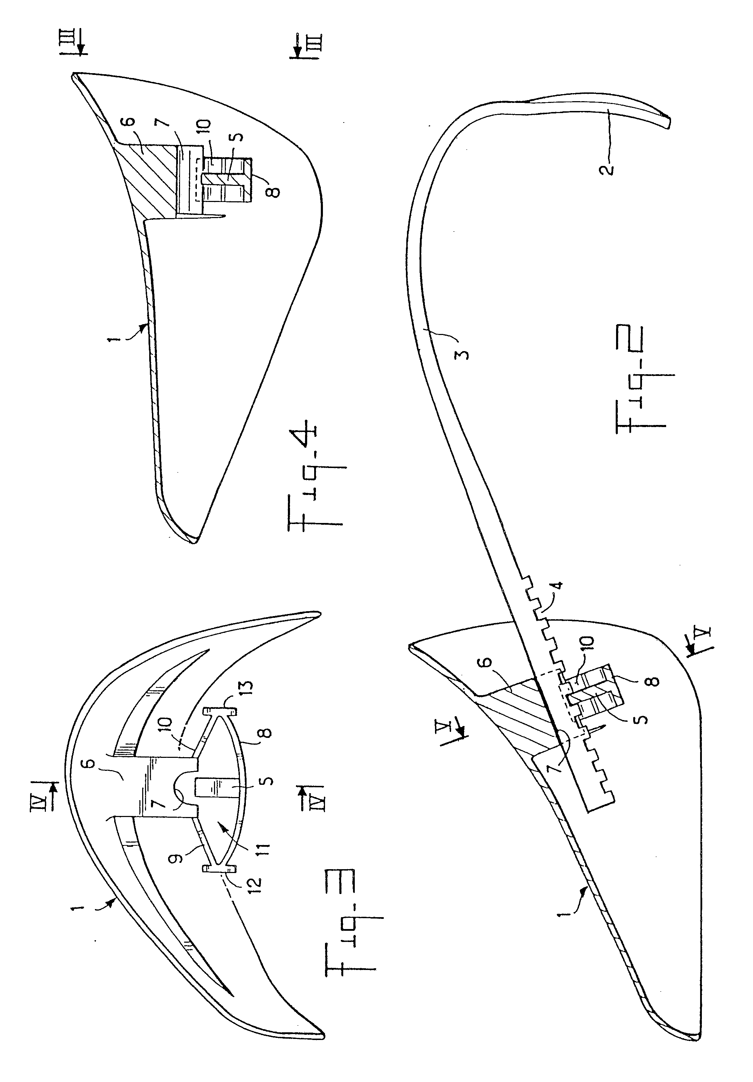

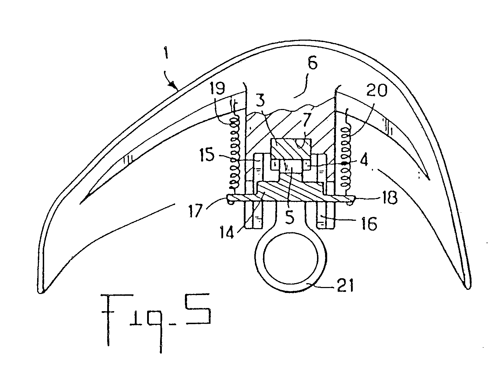

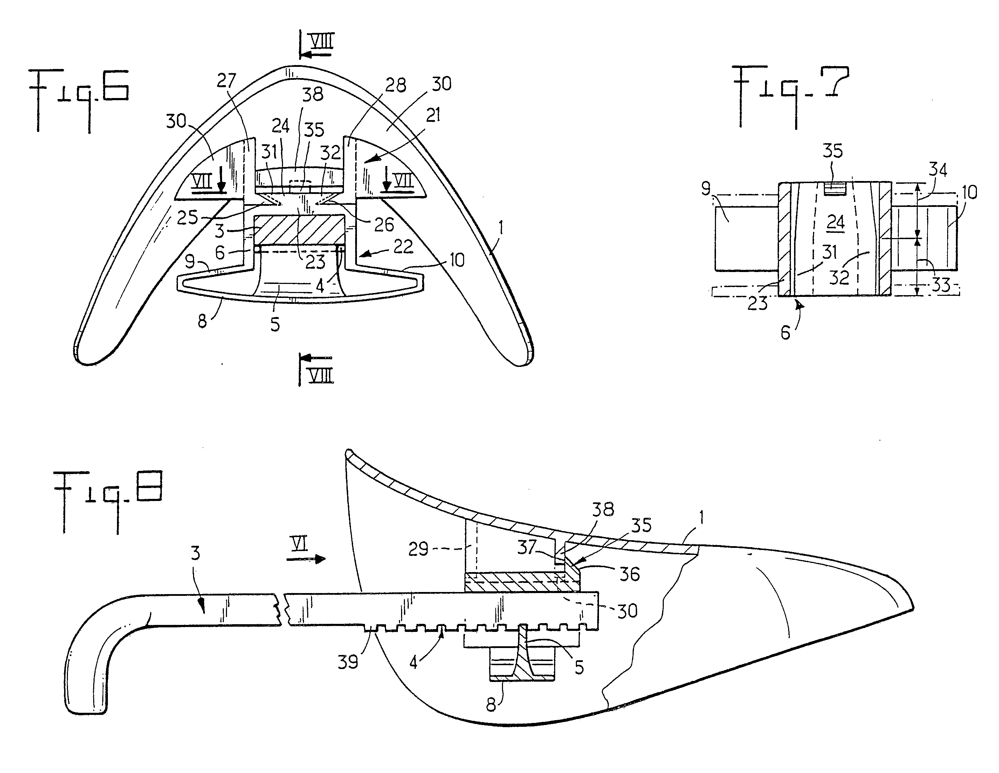

Le brevet français n° 600.085 décrit un autre embauchoir réglable. Plus spécialement dans ses formes de réalisation des figures 3 et 4, l'embout est articulé sur l'extrémité libre d'un tube dans lequel est montée coulissante la tige d'un organe d'appui. Cet ensemble télescopique est réglable en longueur par coopération sélective d'un cran de la tige avec le cran choisi du tube qui en comporte plusieurs.

Dans ces deux brevets français, l'embauchoir est constitué par au moins trois composants distincts mobiles l'un par rapport à l'autre et exécutés en différents matériaux par des techniques de fabrication coûteuses.

La présente invention a pour but de définir la forme et la constitution de l'embauchoir de telle nouvelle façon qu'il soit réalisable entièrement en matière plastique injectée et en un nombre minimal de composants, mobiles l'un par rapport à l'autre ; le nombre de moules différents se trouve ainsi réduit. Elle vise concomitamment à limiter les libertés de mouvement à une seule et à substituer aux autres des déformations contrôlées, ce qui permet d'éviter la casse, d'atténuer l'usure et d'accroître la fiabilité. Elle vise aussi à confier le montage des composants mobiles à la clientèle pour permettre en particulier de diminuer encore le prix de revient.

L'embauchoir de l'invention comprend, comme celui du brevet français n° 464.496, un embout de forme et une plaque incurvée de butée faisant corps avec une lame-ressort montée coulissante dans une glissière de l'embout et coopérant avec un moyen de verrouillage escamotable appartenant audit embout.

Dans le but précité et conformément à l'invention, l'embauchoir est constitué uniquement par deux composants monolithiques en matière plastique dont le premier comporte la plaque de butée, la lame-ressort et une crémaillère formée dans l'extrémité libre de cette lame, tandis que le deuxième composant comporte l'embout, la glissière, une dent d'arrêt susceptible de coopérer avec la crémaillère et au moins deux lames-ressorts reliant la dent à la glissière.

Suivant une première forme de réalisation, les deux composants en matière plastique de l'embauchoir sont moulés chacun en une seule pièce.

Suivant une deuxième forme de réalisation, la glissière, la dent d'arrêt et les lames-ressorts qui portent cette dent forment une pièce en matière plastique moulée dont le fond est relié par un moyen de fixation indémontable à l'embout de forme de façon à former un composant monolithique.

Le fond de la glissière est monté coulissant dans des règles profilées, faisant corps avec l'embout de forme par l'intermédiaire de nervures longitudinales, celles-ci étant entretoisées par une nervure transversale de verrouillage susceptible de coopérer en fin de course du fond avec une dent d'encliquetage que ce dernier présente en saillie.

Le fond de la glissière est profilé en queue d'aronde mâle dont les flancs pentus convergent sur une partie au moins de leur longueur vers l'extrémité antérieure de l'embout, la dent d'encliquetage présentant du côté de cette extrémité une rampe inclinée d'engagement et du côté opposé un épaulement de verrouillage coopérant avec la nervure transversale précitée dudit embout.

Quelle que soit la forme de réalisation choisie, les deux lames-ressorts transversales sont reliées entre elles par leurs extrémités et sont opposées par leurs concavités afin de délimiter un passage pour la lame-ressort longitudinale à crémaillère sous-jacente, la lame-ressort transversale inférieure faisant corps avec la dent et la lame-ressort transversale supérieure étant en deux tronçons distincts faisant corps avec la glissière de part et d'autre de son chemin de guidage de la crémaillère.

Plus particulièrement, les extrémités attenantes des lames-ressorts transversales font corps en outre avec des pattes susceptibles d'être rapprochées l'une de l'autre avec les doigts d'une main pour dégager la dent par fléchissements opposés desdites lames-ressorts.

Divers autres caractéristiques et avantages de l'invention ressortent d'ailleurs de la description détaillée qui suit.

Des formes de réalisation de l'objet de l'invention sont représentées, à titre d'exemples non limitatifs, sur le dessin annexé.

Sur ce dessin:

- la figure 1 est une perspective illustrant une première forme de réalisation de l'embauchoir selon l'invention ;

- la figure 2 est une coupe prise suivant la ligne II-II de la figure 1 ;
- la figure 3 est une vue en bout prise suivant la ligne III-III de la figure 4 ;
- la figure 4 est une coupe prise suivant la ligne IV-IV de la figure 3 ;
- la figure 5 est une coupe prise suivant la ligne V-V de la figure 2, illustrant une variante de réalisation de l'embauchoir,
- la figure 6 est une coupe de l'embout prise en travers de sa glissière, illustrant une deuxième forme de réalisation de l'embauchoir,
- la figure 7 est une vue de dessus de la pièce à fixer dans l'embout, vue qui est prise suivant la ligne VII-VII de la figure 6,
- la figure 8 est une coupe longitudinale prise suivant la ligne VIII-VIII de la figure 6.

Ainsi que cela ressort de la figure 1, l'embauchoir comporte :
- un embout de forme 1 destiné à être inséré dans le bout d'une chaussure ;
- une plaque incurvée de butée 2 destinée à être appliquée contre la face interne du contrefort de la chaussure ;
- une lame-ressort 3 faisant corps avec la plaque 2 et de préférence venue de moulage avec celle-ci, par injection, en particulier d'une matière plastique apte à engendrer dans la pièce monolithique ainsi obtenue une force de réaction élastique à la flexion.

La lame-ressort 3 comporte, à l'opposé de la plaque 2, une crémaillère 4 coopérant avec une dent d'arrêt 5, les dentures conjuguées ayant des flancs droits.

La dent 5 est portée par l'embout 1 pour assurer la liaison entre celui-ci et la lame 3. Cette liaison doit être réglable afin que la longueur de l'embauchoir au repos soit adaptable à la pointure de la chaussure dans laquelle il doit être monté et ceci en appliquant une force de réaction tendant à éloigner le contrefort du bout avec une intensité telle que la conservation de la forme de la tige soit assurée.

A cet effet, et d'une façon générale, la dent 5 est mobile transversalement à la crémaillère et soumise à l'action d'un organe élastique tendant à l'engager dans ladite crémaillère, tandis qu'un organe de préhension permet de l'en dégager pour le réglage en longueur.

Suivant une première forme de réalisation illustrée par les figures 1 à 4, l'embout 1 comporte, venue de moulage, une glissière 6 faisant saillie sur sa face interne et délimitant un chemin de guidage 7 destiné à recevoir la lame 3 de façon que la crémaillère 4 soit apparente.

La dent 5 est portée par une lame-ressort inférieure 8 reliée à ses extrémités avec une lame-ressort supérieure en deux tronçons 9 et 10 faisant corps avec la glissière 6. Ces tronçons s'étendent de part et d'autre du chemin de guidage 7 transversalement à celui-ci et, de préférence, dans un plan perpendiculaire à l'axe longitudinal dudit chemin. Les lames-ressorts 8 et 9, 10 sont incurvées au repos et leurs concavités sont opposées afin de délimiter un passage 11 pour la lame réglable 3. La dent 5 fait saillie dans ce passage sur la lame-ressort inférieure 8. Lorsque ladite dent 5 est en prise avec la crémaillère 4 (figure 2), les lames-ressorts 8 et 9, 10 exercent une force de rappel élastique sur la dent pour la maintenir en prise.

Par ailleurs, des pattes 12 et 13 font corps avec les extrémités jointives des lames 8 et 9, 10 pour constituer des organes de préhension. Ainsi, en pressant sur ces pattes avec deux doigts d'une main pour tendre à les rapprocher, on déforme lesdites lames en les incurvant davantage et on éloigne la dent 5 relativment à la crémaillère 4 pour les désaccoupler l'une de l'autre. Dans cette position, il est possible de modifier la longueur utile (entre la glissière 6 et la plaque 2) de la lame flexible 3. Lorsque le réglage est effectué, il suffit de libérer les pattes 12, 13 pour que la dent 5 verrouille à nouveau la crémaillère 4 en s'enclenchant dans d'autres creux de celle-ci.

Dans cette première forme de réalisation, l'embout 1, la glissière 6, les tronçons de lame 9, 10, les pattes 12, 13, la lame inférieure 8 et la dent 5 forment une pièce unique monolithique susceptible d'être obtenue par moulage d'une matière plastique.

Une variante de réalisation est illustrée par la figure 5 et concerne les moyens assujettissant la dent 5.

En effet, la dent 5 est portée par une coulisse 14 montée dans des chemins du guidage 15, 16 de la glissière 6 qui s'étendent parallèlement l'un à l'autre et orthogonalement au chemin 7 précité. La coulisse 14 est munie de tiges 17, 18 traversant des lumières de la glissière 6. Des ressorts 19, 20 relient les tiges 17, 18 à la face supérieure interne de l'embout 1 pour tendre à engager élastiquement la dent 5 dans la crémaillère 4. Enfin, la coulisse 14 comporte un anneau de tirage 21 permettant de dégager la dent 5 contre l'action élastique antagoniste des ressorts 19, 20.

Dans la forme de réalisation (figures 1 à 4), l'embauchoir ne comporte que deux composants monolithiques en matière plastique injectée :
- le premier comprenant la plaque 2, la lame-ressort 3 et la crémaillère 4,
- le deuxième comprenant l'embout 1, la glissière 6, les lames-ressorts 8 à 10 et la dent 5.

Une deuxième forme de réalisation est illustrée par les figures 6 à 8. Elle est destinée à faciliter la fabrication du deuxième composant et à en réduire le coût. A cet effet, ce composant est divisé en deux pièces 21 et 22 fabriquées séparément et assemblées définitivement entre elles.

La pièce 21 comporte l'embout 1 et des moyens d'assemblage, tandis que la pièce 22 comporte la dent 5, les lames-ressorts 8 à 10 et la glissière 6, ainsi que des moyens d'assemblage conjugués aux précédents.

Les moyens d'assemblage définitifs sont constitués par un fond 23 de la glissière 6 profilé en queue d'aronde mâle 24 coopérant avec des règles latérales 25, 26 profilées en queue d'aronde femelle, ces règles faisant corps avec l'embout 1. A cet effet, les règles 25, 26 sont reliées audit embout par des nervures longitudinales 27, 28 dont chacune est elle-même reliée à l'embout par des nervures transversales postérieure 29 et antérieure 30.

Comme le montre la figure 7, les flancs pentus 31 et 32 de la queue d'aronde 24 sont, dans une zone postérieure 33, parallèles entre eux et, dans une zone antérieure 34, convergents vers l'avant. Il en est de même pour les flancs des règles 25, 26. Ainsi, au moment du montage légèrement à force par coulissement de la pièce 22 dans la pièce 21, il se produit un coincement et un positionnement.

Par ailleurs, la queue d'aronde 24 du fond 23 présente en saillie une dent d'encliquetage 35 délimitée, à l'avant, par une rampe inclinée d'engagement 36 et à l'arrière, par un épaulement de verrouillage 37. Cette dent est destinée à coopérer avec une nervure transversale médiane 38 reliant les nervures longitudinales 27, 28 de l'embout 1, pour immobiliser définitivement et de façon indémontable la pièce 22 dans la pièce 21 lorsqu'elles occupent relativement l'une à l'autre la position de coincement précitée des flancs convergents.

Bien entendu, la dent 35 et la nervure 38 sont positionnées à cet effet. Dans l'exemple représenté, la dent 35 est située en extrémité avant de la queue d'aronde 24 de la nervure transversale médiane 38 moins haute que les nervures transversales marginales 30, prolonge celles-ci. Il est à noter que la matière des deux pièces se déforme élastiquement lorsque la rampe inclinée 36 de la dent 35 franchit la nervure 38 en fin de course de coulissement et que par rappel élastique, l'épaulement 37 de ladite dent vient se placer devant ladite nervure après franchissement qui correspond au coincement des flancs convergents, ci qui a pour effet de lier définitivement lesdits pièces.

Dans cette deuxième forme de réalisation, la lame-ressort 3 présente une section rectangulaire. Les crans de la crémaillère 4 et la dent 5 sont conformés (figure 8) pour que le réglage de longueur puisse être effectué en tirant ou en poussant sur ladite lame 3 sans qu'il soit nécessaire de comprimer les lames-ressorts 8 à 10 ; dès lors, les pattes 12, 13 sont supprimées.

En outre, il peut être avantageux d'aider l'utilisateur dans la recherche de la bonne longueur en marquant par moulage sur les têtes 39 des dents de la crémaillère 4 les pointures des chaussures qui correspondant aux longueurs de l'embauchoir déterminées par ces dents de crémaillère.

Il est bien évident que les moyens mis en oeuvre pour réunir les pièces 21 et 22 peuvent être différents de ceux d'encliquetage décrits dans ce qui précède. En particulier, ils peuvent procéder par collage. soudage, agrafage ou autre.

## Revendications

1.- Embauchoir réglable comprenant un embout de forme (1) et une plaque incurvée de butée (2) faisant corps avec une lame-ressort (3) montée coulissante dans une glissière (6) de l'embout (1) et coopérant avec un moyen de verrouillage escamotable appartenant audit embout, caractérisé en ce qu'il est constitué uniquement par deux composants monolithiques en matière plastique dont le premier comporte la plaque de butée (2), la lame-ressort (3) et une crémaillère (4) formée dans l'extrémité libre de cette lame, tandis que le deuxième composant comporte l'embout (1), la glissière (6), une dent d'arrêt (5) susceptible de coopérer avec la crémaillère et au moins deux lames-ressorts (8 à 10) reliant la dent à la glissière.

2.- Embauchoir selon la revendication 1, caractérisé en ce que ses deux composants en matière plastique sont moulés chacun en une seule pièce.

3.- Embauchoir selon la revendication 1, caractérisé en ce que la glissière (6), la dent d'arrêt (5) et les lames-ressorts (8 à 10) qui portent cette dent forment une pièce (22) en matière plastique moulée dont le fond (23) est relié par un moyen de fixation indémontable à l'embout de forme (1) de façon à former un composant monolithique.

4.- Embauchoir selon la revendication 3, caractérisé en ce que le fond (23) de la glissière (6) est monté coulissant dans des règles (25, 26) profilées, faisant corps avec l'embout de forme (1) par l'intermédiaire de nervures longitudinales (27, 28), celles-ci étant entretoisées par une nervure transversale de verrouillage (38) susceptible de coopérer en fin de course du fond (23) avec une dent d'encliquetage (35) que ce dernier présente en saillie.

5.- Embauchoir selon la revendication 4, caractérisé en ce que le fond (23) de la glissière (6) est profilé en queue d'aronde mâle (24) dont les flancs pentus (31, 32) convergent sur une partie au moins de leur longueur vers l'extrémité antérieure de l'embout, la dent d'encliquetage (35) présentant du côté de cette extrémité une rampe inclinée d'engagement (36) et du côté opposé un épaulement de verrouillage (37) coopérant avec la nervure transversale précitée dudit embout.

6.- Embauchoir selon l'une quelconque des revendications 1 à 5, caractérisé en ce que les deux lames-ressorts (8 à 10) transversales sont reliées entre elles par leurs extrémités et sont opposées par leurs concavités afin de délimiter un passage (11) pour la lame-ressort longitudinale (3) à crémaillère sous-jacente (4), la lame-ressort transversale inférieure (8) faisant corps avec la dent (5) et la lame-ressort transversale supérieure étant en deux tronçons distincts (9, 10) faisant corps avec la glissière (6) de part et d'autre de son chemin de guidage (7) de la crémaillère (4).

7.- Embauchoir selon la revendication 6, caractérisé en ce que les extrémités attenantes des lames-ressorts transversales font corps en outre avec des pattes (12, 13) susceptibles d'être rapprochées l'une de l'autre avec les doigts d'une main pour dégager la dent par fléchissements opposés desdites lames-ressorts.

Fig_1

EP 0 332 482 A1

Fig.3

Fig.4

Fig.2

EP 0 332 482 A1

Fig. 5

Fig.7

Fig.6

Fig.8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-1 058 736  (PAUL)<br>* Page 1, colonne de droite, lignes 26-39 *<br>--- | 1,2 | A 43 D    3/14 //<br>F 16 B   21/07 |
| A,D | FR-A-  464 496  (ECKELMANN)<br>* En entier *<br>--- | 1 | |
| A | EP-A-0 132 966  (U.S.M.)<br>* En entier *<br>--- | 1,3,6,7 | |
| A | FR-A-2 505 418  (RAGOT)<br>* Page 6, ligne 20 - page 7, ligne 25 *<br>--- | 1,3,6,7 | |
| A,D | FR-A-  600 085  (SALOM)<br>--- | | |
| A | US-A-1 469 238  (NEWLIN)<br>----- | | |

**DOMAINES TECHNIQUES RECHERCHES (Int. Cl.4)**

A 43 D
A 47 L
F 16 B

**Le présent rapport a été établi pour toutes les revendications**

| Lieu de la recherche | Date d'achèvement de la recherche | Examinateur |
|---|---|---|
| LA HAYE | 30-05-1989 | RIS M. |